## Europäisches Patentamt
## European Patent Office
## Office européen des brevets

(19)

(11) Numéro de publication: **0 015 212**
**B1**

(12) **FASCICULE DE BREVET EUROPEEN**

(45) Date de publication du fascicule du brevet: **12.10.83**

(51) Int. Cl.³: **H 04 N 7/12, H 04 N 5/92**

(21) Numéro de dépôt: **80400248.3**

(22) Date de dépôt: **22.02.80**

(54) Procédé et appareil de compression de données, notamment de signaux de télévision.

(30) Priorité: **23.02.79 FR 7904621**

(43) Date de publication de la demande:
**03.09.80 Bulletin 80/18**

(45) Mention de la délivrance du brevet:
**12.10.83 Bulletin 83/41**

(84) Etats contractants désignés:
**AT BE CH DE FR GB IT LU NL SE**

(56) Documents cités:
**DE - A - 2 158 983**
**FR - A - 1 257 223**
**FR - A - 2 016 857**
**FR - A - 2 023 193**
**FR - A - 2 120 171**
**FR - A - 2 157 927**
**FR - A - 2 166 579**
**US - A - 3 459 886**

(73) Titulaire: Arnaud, Jean Pierre Alfred
23, rue de Pontoise
F-95160 Montmorency (FR)

(72) Inventeur: Arnaud, Jean Pierre Alfred
23, rue de Pontoise
F-95160 Montmorency (FR)

Courier Press, Leamington Spa, England.

# Procédé et appareil de compression de données, notamment de signaux de télévision

La présente invention concerne un procédé et un appareil de compression de données, destinés au cas particulier de certains signaux. Plus précisément, l'invention s'applique à des signaux qui peuvent être découpés en tranches comprenant chacune plusieurs blocs de données, la plus grande partie des données d'un bloc étant sensiblement identique aux données correspondantes d'un bloc adjacent ou voisin. Un exemple de tel signal est représenté par les signaux de télévision ou de façon plus générale par les signaux vidéo.

Avant la description de l'invention, il convient de considérer la constitution des signaux de télévision. Ces signaux comprennent des séries d'images, souvent formées elles-mêmes de trames entrelacées. Les images successives ont le plus souvent un très grand nombre d'informations en commun. Ainsi, dans le cas de la surveillance de locaux (banques par exemple), la plus grande partie des images se conserve sur de longues périodes. Cette considération s'applique aussi aux programmes de télévision. La quasi-totalité de ces programmes est formée d'un certain nombre de plans dont la durée est de l'ordre de plusieurs secondes, en général comprise entre 8 et 12 s. Dans le cas d'un plan dont la durée est de 10 s, on note que, selon les normes européennes, le plan contient 250 images complètes. Ces images qui appartiennent à un même plan, ont un très grand nombre d'informations communes. Ainsi, en général, dans un plan, un objet ou une personne se déplace, et le nombre de zones élémentaires dont l'information varie (couleur ou noir et blanc) est faible par rapport à la quantité totale d'informations de l'image. Par contre, dans certains plans (panoramiques rapides, fondu-enchaîné), le nombre d'informations qui change d'une image à la suivant est important.

On connaît déjà des procédés destines à ne conserver qu'une partie des informations des images, par élimination des parties redondantes uniquement. Selon les procédés, chaque image est comparée à une autre image considérée comme référence, par exemple l'image précédente. Les parties de l'image qui ne diffèrent pas de celles de l'image de référence sont éliminées, les parties qui diffèrent sont gardées, et un signal d'adresse indique quelles sont les parties conservées. Selon ces procédés, la représentation d'une suite d'images nécessite la conservation de toute l'image de référence, des parties d'images suivantes qui diffèrent de l'image de référence, et d'un signal d'adresse pour chaque image suivante.

Des perfectionnements ont été apportés à ces procédés. Ainsi, les brevets français n° 2 016 857 et 2 023 193 décrivent un procédé et un appareil selon lesquels la quantité d'information conservée est encore réduite par utilisation d'une adresse à plusieurs niveaux (c'est-à-dire d'une adresse comprenant une partie désignant un intervalle et une partie désignant une fraction dans cet intervalle). Le brevet français n° 2 120 171 décrit un système analogue dans lequel un index est associé à des groupes d'informations et indique si ceux-ci sont identiques aux groupes de référence, peu différents de ces groupes ou très différents au contraire. Tous ces systèmes décrivent la formation d'un signal particulier d'adresse pour chacun des groupes d'informations comparés aux groupes correspondants de référence.

On considère maintenant la mise en oeuvre de l'invention, dans son application générale à des signaux qui peuvent être découpés en tranches comprenant chacune plusieurs blocs de données. Il faut noter que, dans le cas d'un signal de télévision, ces blocs de données représentent des images, ou plus précisément la partie vidéo dont les données de synchronisation ont été retirées.

Selon l'invention, dans une "tranche" du signal, recouvrant plusieurs blocs de données, un premier bloc est enregistré en totalité, et les blocs suivants sont comparés à ce premier bloc: les parties qui diffèrent de celles du premier bloc sont conservées et un signal de corrélation indique quelles sont les parties conservées. Par exemple, ce signal de corrélation peut avoir un niveau 1 lorsque ces parties qui diffèrent sont conservées, et un niveau 0 dans le cas contraire. Cependant, la conservation d'un signal de corrélation pour chacun des blocs de données est peu commode, car ce signal doit aussi être enregistré ou transmis et occupe une certaine surface ou un certain temps. Pour cette raison, selon le procédé et l'appareil de l'invention, le signal de corrélation est le même pour tous les blocs de données de la tranche considérée. De cette manière, le signal obtenu ne contient finalement que le premier bloc de données, un signal de corrélation valable pour tous les blocs de données, et les données de tous les blocs suivant le premier qui correspondent aux parties des blocs pour lesquelles le signal de corrélation indique un défaut de corrélation entre le premier bloc et au moins l'un des blocs suivants de la tranche. Le signal obtenu comporte aussi évidemment des informations d'horloge ou de synchronisation qui peuvent se révéler nécessaires. Par ailleurs, il n'est pas nécessaire que le bloc auquel les autres blocs sont comparés, soit le premier, mais cette caractéristique est avantageuse car elle permet le début des opérations de comparaison dès la fin du premier bloc de données.

Plus précisément, l'invention concerne un procédé de compression de données représentées par un signal qui peut être découpé en tranches comprenant chacune au moins trois blocs de données, la plus grande partie des données d'un bloc étant sensiblement identique aux données correspondantes d'un bloc adjacent ou voisin, ce procédé comprenant, pour une tranche au moins du signal,

— la comparaison au signal de données correspondant à un bloc, considéré comme bloc de référence, de chaque signal de données représentant un autre bloc de la tranche,

— la formation d'un signal global de corrélation qui ne peut avoir un premier état que lorsque les données correspondantes du signal de données représentant le bloc de référence et de chacun des signaux de données représentant un autre bloc, présentent une relation prédéterminée, et qui a un autre état au moins lorsque les données correspondantes d'un nombre minimal au moins de signaux de données représentant d'autres blocs et du signal de données du bloc de référence ne présentent pas ladite relation prédéterminée, ce nombre minimal étant de préférence égal à 1,

— la formation de signaux de données de non-corrélation pour certains blocs de la tranche, le signal de données de non-corrélation d'un bloc ne comprenant que les données du signal représentant ce bloc qui correspondent au fait que le signal global de corrélation a son autre état, et

— la formation d'un signal représentant la tranche et comprenant les données du signal représentant le bloc de référence, du signal global de corrélation et des signaux de données de non-corrélation.

Dans un premier mode de réalisation, les signaux de données représentant tous les blocs de la tranche sont mémorisés. Cependant, la formation d'un signal global de corrélation peut être progressive, c'est-à-dire qu'elle peut comprendre la formation d'un signal local de corrélation qui n'a un premier état que lorsque les données correspondantes du signal de données représentant le bloc de référence et du signal de données représentant un autre bloc présentent la relation prédéterminée, et qui a un autre état au moins lorsque les données correspondantes ne présentent pas ladite relation prédéterminée, et la formation d'un signal mis à jour de corrélation qui n'a un premier état que lorsque le signal mis à jour de corrélation correspondant au bloc précédant l'autre bloc et le signal local de corrélation ont tous deux leur premier état.

Dans ce mode de réalisation, lorsque le signal global de corrélation a été formé, il est avantageux que les signaux de données de non-corrélation des différents blocs soient transmis en parallèle à un registre qui les met sous une forme série.

Dans un second mode de réalisation, le signal de données représentant un premier bloc considéré comme bloc de référence, est mémorisé, et les signaux de données représentant les blocs suivants sont comparés tour à tour au signal de données représentant le bloc de référence, la comparaison des données du bloc de référence à celles de chaque bloc comprenant la formation d'un signal de corrélation ayant un premier état lorsque les données correspondantes des signaux présentent une relation prédéterminée et un autre état lorsque ces signaux ne présentent pas cette relation prédéterminée. Le signal de corrélation obtenu subit une opération réunion avec le signal global de corrélation obtenu à partir de tous les blocs précédant le bloc en cours. De cette manière, le signal gobal de corrélation est remis à jour progressivement. Les données de non-corrélation de chaque bloc sont conservées, pour chque bloc, dans un registre circulant. Les données du bloc de référence sont imbriquées aux données de non-corrélation déjà conservées dans le registre circulant lorsque, dans une partie correspondante, le signal global de corrélation qui était dans son premier état, passe à un second état. De cette manière, les données de non-corrélation correspondant à chacun des blocs sont remises à jour à chaque bloc.

Lorsque la tranche est terminée, pour une raison quelconque, il est commode que le signal de corrélation ait sont autre état pendant une fraction déterminée d'un bloc de données, correspondant par exemple à la dimension d'un registre circulant ou à une fraction déterminée d'un bloc de données.

Une tranche de signal peut être interrompue soit lorsqu'elle comprend un nombre de blocs égal à la limite supérieure déterminée, soit lorsque la fraction pendant laquelle le signal de corrélation a son autre état approche ou dépasse une valeur déterminée, soit lorsque la comparaison indique qu'un bloc est très différent du bloc de référence. Dans ce cas, la tranche est interrompue juste avant le bloc qui diffère beaucoup du bloc de référence, ce bloc très différent constituant alors le premier bloc de la tranche suivante.

La relation prédéterminée que présentent deux signaux comparés quand le signal de corrélation a son premier état, est avantageusement le fait que la différence entre les deux signaux est inférieure à une valeur de seuil.

Le traitement du signal vidéo, qui est sous forme analogique, peut être effectué entièrement sous forme analogique, par exemple dans le premier mode de réalisation. Cependant, on sait que le traitement entièrement numérique permet la conservation des blocs de données avec une meilleure qualité. Pour cette raison, le traitement peut être réalisé sous forme entièrement numérique. Cependant, le coût peut être relativement faible lorsque les signaux sont traités en partie sous forme analogique (mémorisation et comparaison) et en partie sous forme numérique (registre circulant).

Dans le cas d'un signal de télévision dans lequel un bloc de données correspond à une image, les signaux de synchronisation sont extraits avant traitement du signal vidéo. En outre, l'information sonore quie accompagne le signal vidéo ne peut évidemment pas subir le même traitement et elle est associée à nouveau à l'information vidéo qui a été traitée, en vue de l'enregistrement sur le support final ou de la transmission, avec des données de synchronisation, d'horloge, etc.

L'invention concerne aussi un appareil de comparaison de données représentées par un signal qui peut être découpé en tranches comprenant chacun au moins trois blocs de données, cet appareil étant destiné à la mise en oeuvre d'un procédé du type décrit précédemment. Un tel appareil comprend une mémoire destinée à conserver au moins le signal d'un bloc constituant un bloc de référence, un comparateur destiné à recevoir le signal de bloc de référence d'une part et le signal de données d'au moins un autre bloc d'autre part et à former un signal de corrélation qui a un premier état lorsque les données correspondantes des deux signaux comparés au moins présentent une relation prédéterminée et qui a un autre état lorsque les signaux ne présentent pas cette relation prédéterminée, un circuit de formation d'un signal global de corrélation qui ne peut avoir un premier état que lorsque les données correspondantes du signal de données du bloc de référence et de chacun des signaux de données représentant un autre bloc présentent ladite relation prédéterminée et qui a un autre état au moins lorsque les données correspondantes d'un nombre minimal au moins de signaux de données représentant d'autres blocs et du signal de données du bloc de rérérence ne presentent pas ladite relation prédéterminée, et un organe de commande destiné à recevoir le signal de corrélation et à commander la transmission de signaux de données de non-corrélation comprenant des données représentant les blocs comparés uniquement lorsque le signal de corrélation a son autre état, ledit nombre minimal étant avantageusement égal à 1.

Dans un premier mode de réalisation, il est avantageux que la mémoire conserve tous les blocs de données de la tranche.

Dans un second mode de réalisation, il est avantageux qu'une seconde mémoire soit destinée à conserver le signal de données du bloc qui est comparé au signal du bloc de référence afin que ce nouveau bloc puisse être conservé comme bloc de référence de la tranche suivante si la comparaison indique que la différence avec le premier bloc de référence est très importante.

L'appareil comprend avantageusement un circuit d'aiguillage destiné à transmettre le signal qu'il reçoit soit à la mémoire du bloc de référence, soit au comparateur et éventuellement à la seconde mémoire.

L'appareil comprend aussi avantageusement un circuit d'aiguillage destiné à recevoir les données des mémoires et dirigées vers le comparateur et à les transmettre soit vers une sortie, soit vers des registres de mémoire.

Le signal de corrélation est avantageusement conservé dans une mémoire de type circulant ou avantageusement dans deux mémoires. Un circuit porte reçoit le signal du comparateur et le signal de corrélation du bloc précédent et il forme le signal global de corrélation du bloc en cours.

Les données de non-corrélation sont avantageusement conservées dans des registres circulants. Dans le cas où la mémoire ne conserve que le bloc de référence et éventuellement un second bloc, il s'agit avantageusement de registres circulants. Dans le cas où la mémoire conserve tous les blocs de données de la tranche, il s'agit avantageusement d'un registre ayant des entrées parallèles, recevant les données des différents blocs, et ayant une sortie série qui transmet ces données de non-corrélation des différents blocs les unes après les autres.

Il est avantageux que la mémoire conservant les blocs de données et la mémoire conservant le ou les signaux de corrélation soient formées par un seul tambour ayant plusieurs têtes de lecture-écriture.

Une horloge est destinée à former des signaux dépendant des données de synchronisation tirées du signal qui peut être découpé en tranches et plus précisément de chaque bloc de données. Cette horloge transmet des signaux notamment à l'organe de commande qui est avantageusement un microprocesseur.

L'appareil comprend aussi avantageusement un enregistreur sur bande magnétique par exemple (ou qui peut enregistrer sur disques) qui enregistre toutes les données du signal représentant la tranche, c'est-à-dire les données du bloc de référence, les données de non-corrélation et le signal de corrélation, avec éventuellement des données d'horloge et de synchronisation ajoutées. Le moteur de cabestan de l'enregistreur est commandé par l'organe de commande afin que l'enregistrement soit synchronisé dans le temps en fonction de la durée des différentes tranches.

D'autres caractéristiques et avantages de l'invention ressortiront mieux de la description qui va suivre, faite en référence aux dessins annexés sur lesquels:

—la figure 1 est une perspective d'un appareil de compression de données selon l'invention, sous forme d'un magnétoscope;

—la figure 2 est un diagramme synoptique représentant les principaux composants d'un premier mode de réalisation d'appareil selon l'invention, avec les circuits des données représentant un signal de télévision, dans le cas de l'enregistrement d'un signal de télévision;

—la figure 3 est un diagramme synoptique comprenant les mêmes composants que celui de la figure 2 mais représentant les trajets des différents signaux de commande utilisés lors d'un enregistrement assuré par l'appareil de la figure 2;

—la figure 4 est un diagramme synoptique en partie sous forme schématique d'un registre de l'appareil des figures 2 et 3;

—la figure 5 est un diagramme synoptique représentant l'appareil des figures 2 et 3 et ses différents composants, utilisé lors de la restitution d'un signal de télévision destiné à un moniteur, à partir d'un enregistrement réalisé sur une bande magnétique sous forme comprimée selon l'invention;

—la figure 6 est un diagramme synoptique correspondant à celui de la figure 5 mais représentant les trajets des signaux de commande;

—la figure 7 est un diagramme synoptique d'un second mode de réalisation d'appareil selon l'invention, destiné à assurer un traitement entièrement analogique des signaux; et

—la figure 8 est un diagramme synoptique d'une partie d'une variante de circuit assurant l'élimination d'une grande partie du souffle des images.

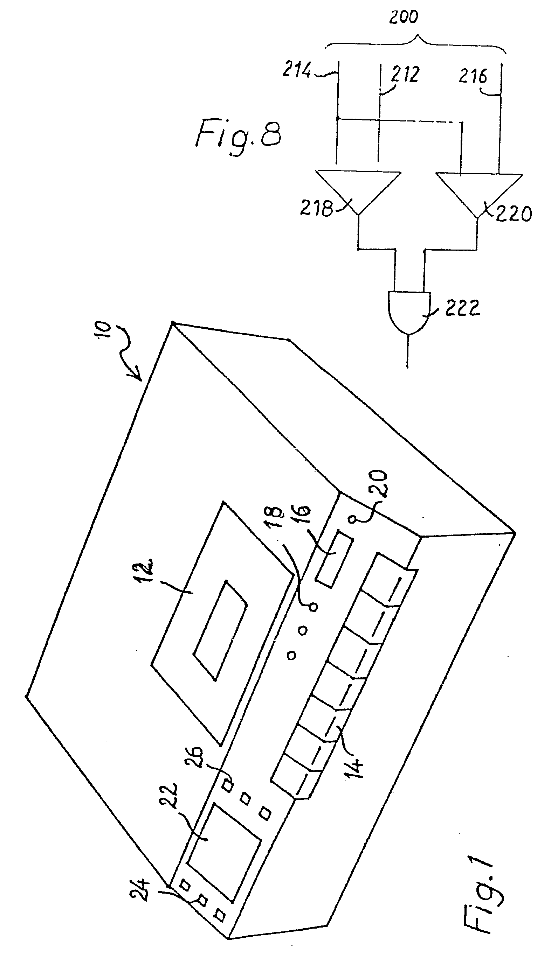

La figure 1 est une perspective d'un magnétoscope assurant la compression des données selon l'invention. Cet appareil 10 comprend un boîtier de forme parallélépipédique dont la partie supérieure comporte un couvercle 12 destiné à fermer un compartiment qui loge une cassette de bande magnétique qui constitue le support des informations. Une série de touches 14 permet la commande des différentes fonctions classiques telles qu'avance et retour rapides, lecture, enregistrement, arrêt, arrêt sur image. Un compteur 16 permet le repérage de la bande. Des boutons 18 permettent la commande de diverses fonctions telles que remise à 0 du compteur, sélection de canal, etc., et le bouton 20 commande un interrupteur. La référence 22 désigne une horloge qui permet la programmation du magnétoscope afin qu'il puisse fonctionner à heure dite pour l'enregistrement d'un programme voulu. Les références 24 et 26 représentent essentiellement des voyants indiquant l'état de fonctionnement de l'appareil (enregistrement, arrêt sur image, mise en route manuelle, mise en route automatique, etc.).

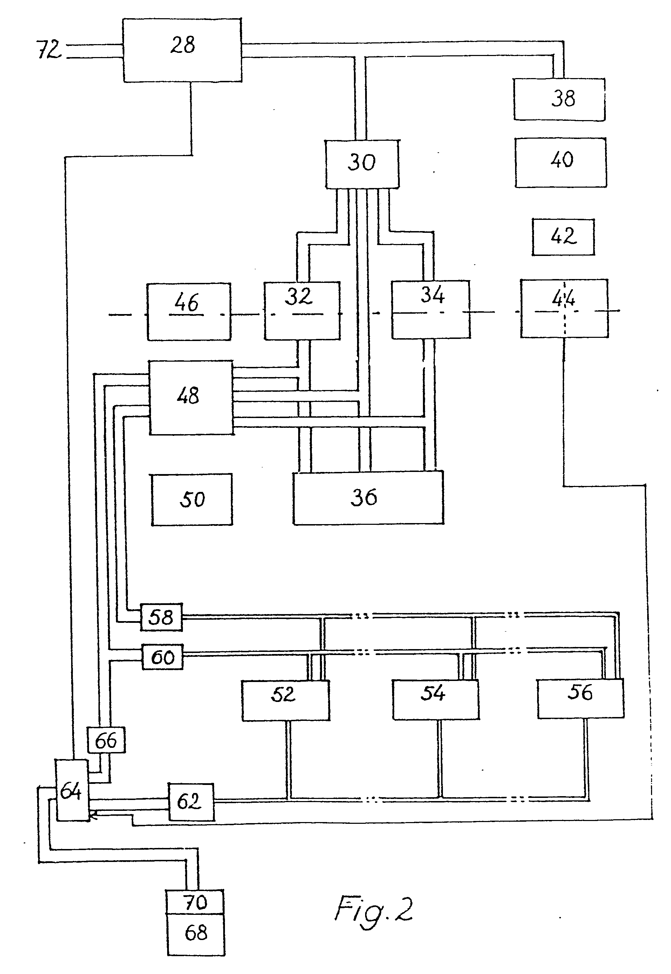

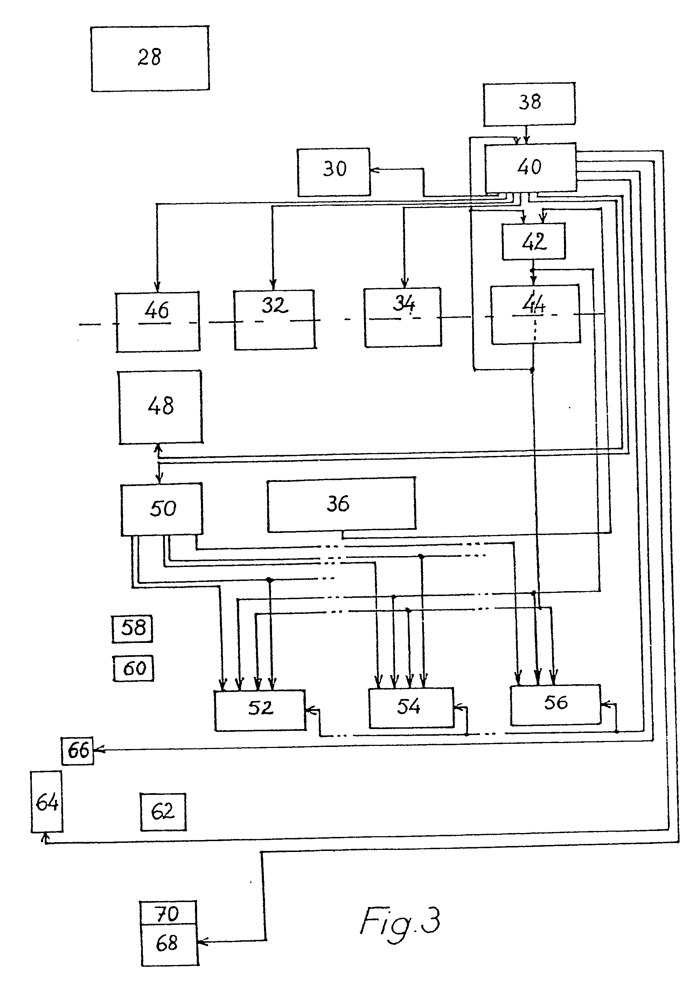

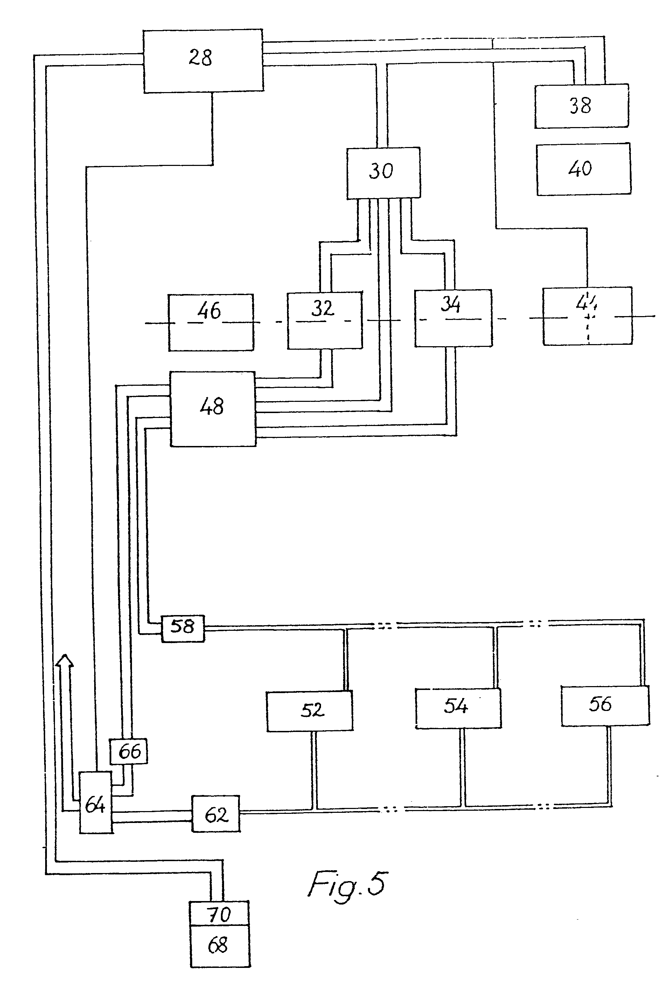

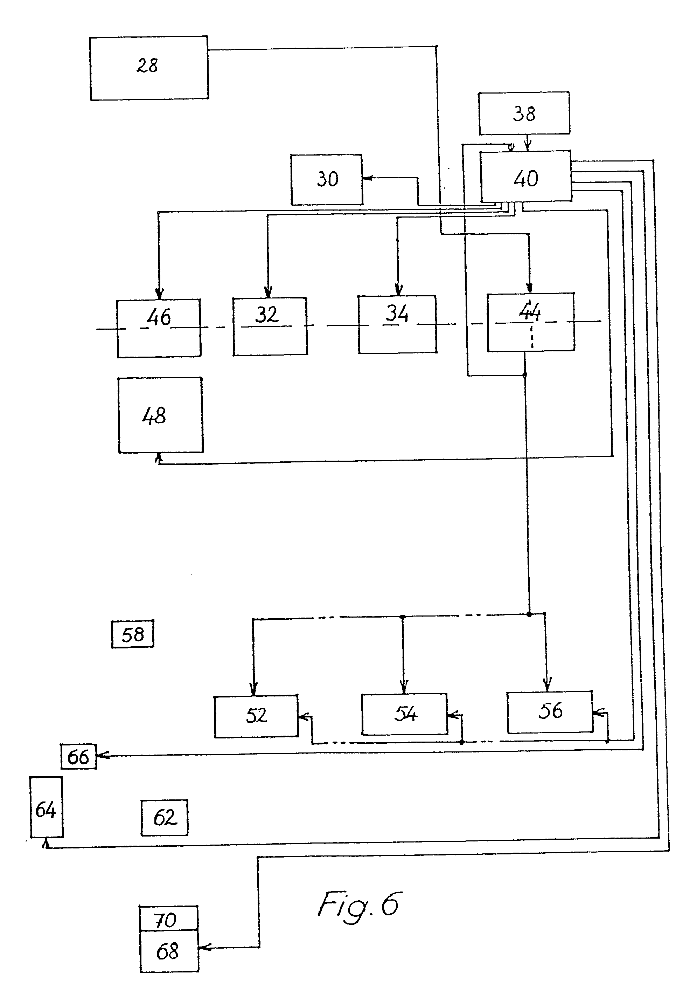

Les figures 2 à 6 font des diagrammes synoptiques d'un premier mode de réalisation d'appareil selon l'invention. Les figures 2, 3, 5 et 6 représentent les mêmes composants, les trajets des signaux étant cependant différents. Les figures 2 et 3 correspondent à une opération d'enregistrement sur bande magnétique alors que les figures 5 et 6 correspondent à une opération de lecture. Les figures 2 et 5 correspondent au trajet des signaux conservés et traités, alors que les figures 3 et 6 correspondent essentiellement aux trajets des signaux de commande.

Sur les figures 2, 3, 5 et 6, la référence 28 désigne un circuit destiné à préparer le signal, arrivant en 72, en vue de son traitement. Cette préparation comprend par exemple la séparation de composantes de synchronisation, etc. Le signal vidéo à traiter parvient alors à un circuit 30 d'aiguillage qui transmet le signal qu'il reçoit soit à une première mémoire 32, soit à une seconde mémoire 34, soit directement à un comparateur 36. Celui-ci reçoit normalement deux signaux, celui de l'une des mémoires 32, 34 et directement le signal provenant du circuit 30. La référence 38 désigne une horloge qu'on a représentée reliée au circuit 28 afin d'indiquer que les différentes opérations sont commandées par des signax d'horloge dont la fréquence de réccurence dépend évidemment de la fréquence de réccurence des blocs de données du signal 72. Les signaux de l'horloge 38 peuvent parvenir aux différents circuits, mais on ne les a représentés que transmis à un organe de commande 40, plus précisément un microprocesseur.

La référence 42 désigne un circuit porte qui, comme indiqué sur la figure 2, reçoit, en mode d'enregistrement, un signal de la sortie de la mémoire 44 du signal de corrélation, et un signal du comparateur 36. Ce circuit porte 42 est du type réunion et il transmet un signal de niveau élevé lorsque l'un quelconque de ses signaux d'entrée à un niveau élevé et un signal de faible niveau lorsque ses deux signaux d'entrée ont un faible niveau. La mémoire 44 de signaux de corrélation est avantageusement double, c'est-à-dire qu'elle comprend deux mémoires, l'une qui se décharge pendant que l'autre se charge. Toutes les mémoires 32, 34, 44 sont avantageusement formées sur un même tambour magnétique entraîné par un moteur 46.

Un circuit 48 d'aiguillage prélève les signaux à la sortie des mémoires 32, 34 et directement à la sortie du circuit 30 d'aiguillage, et il les transmet soit à des registres 52, 54, 56 (le nombre de registres est avantageusement égal au nombre maximal de blocs d'une tranche réduit d'une unité), par l'intermédiaire de convertisseurs analogiques'numériques 58, 60. Les opérations de chargement des registres 52, 54, 56 s'effectuent avantageusement par mise en oeuvre d'un signal d'un compteur 50. Les sorties des registres 52, 54, 56 sont reliées, par un convertisseur numérique-analogique 62, à un circuit 64 de sortie qui est destiné à former le signal représentant la tranche à partir du signal transmis par le circuit 48 d'aiguillage par l'intermédiaire d'un circuit porte 66, des signaux conservés dans les registres 52, 54 et 56 et transmis par le convertisseur 62, et du signal de corrélation provenant de la mémoire 44. Ce signal est transmis à un dispositif d'enregistrement sur bande magnétique par exemple, commandé par un moteur 68 qui entraîne par exemple le cabestan, le signal parvenant à une ou de préférence plusieurs têtes 70 du dispositif d'enregistrement.

On considère maintenant la mise en oeuvre de l'appareil lors d'une opération d'enregistrement, en référence aux figures 2 et 3. Les données vidéo transmises par le circuit 28, sous forme d'une série de blocs de données, parviennent au circuit 30 d'aiguillage. Celui-ci, sous la commande du microprocesseur 40, transmet le premier bloc de données, destiné à constituer un block de référence, à l'une des deux mémoires, par exemple la mémoire 32. Lorsque le second bloc de données arrive, le circuit 30 d'aiguillage, piloté par le microprocesseur 40, le transmet à la fois directement au comparateur 36 et à l'autre mémoire, la mémoire 34. Le comparateur 36 reçoit alors le signal du bloc de référence provenant de la mémòire 32 et directement le signal de bloc en cours, mais il ne reçoit pas alors le signal de la mémoire 34. Le comparateur 36 compare donc les deux signaux qu'il reçoit et transmet un signal au circuit porte 42, ce signal ayant par exemple un niveau 0 lorsque la différence entre les deux signaux est inférieure à une valeur de seuil, celle-ci pouvant dépendre de l'intensité des signaux comparés. Le signal du comparateur 36, appelé signal local de corrélation, est combiné par la porte 42 au signal global de corrélation conservé dans la mémoire 44. Cette mémoire 44 transmet donc le signal de corrélation qui avait été formé lors de la comparaison du bloc précédent, et reçoit un signal mis à jour ou signal global de corrélation obtenu par l'opération réunion portant sur le signal global précédent de corrélation et le nouveau signal local de corrélation.

Les données du bloc de référence sont donc disponibles dans l'une des mémoires telles que 32, et le signal de corrélation dans la mémoire 44, ces signaux étant disponibles à tout moment. Cependant, le signal représentant la tranche doit comprendre en outre les données de non-corrélation se rapportant à chacun des blocs de données sauf au premier pris comme référence. A cet effet, il faut que, pour chaque bloc de données, des données de non-corrélation soient construites afin qu'elles correspondent aux moments où le signal de corrélation est à son état élevé et indique ainsi qu'au moins un bloc de données diffère du bloc de référence.

La construction des données de non-corrélation est la suivante. Lorsque le signal global de corrélation formé au cours du bloc comparé, comme indiqué à la sortie de la porte 42, se trouve à son niveau élevé par exemple, les données du bloc en cours sont transmises par le circuit 48 d'aiguillage au registre qui doit contenir les données de non-corrélation du bloc de données en cours, par l'intermédiaire du convertisseur 60. Ces données, à la fin du bloc en cours, correspondent parfaitement au signal global de corrélation qui est alors conservé dans la mémoire 44. Cependant, lors de la comparaison du bloc suivant au bloc de référence, il peut arriver que le signal global de corrélation formé au cours du bloc précédent se trouve à un faible niveau alors que le comparateur 36 indique que le signal global correspondant au nouveau bloc doit prendre un niveau élevé. Il faut donc que les données de non-corrélation conservées dans le registre 54 soient remises à jour afin qu'elles correspondent au nouveau signal global de corrélation formé. A cet effet, les données du registre 54 sont combinées à des données prélevées dans le bloc de référence contenu dans la mémoire 32, afin que les nouvelles données de non-corrélation correspondent au nouveau signal global de corrélation.

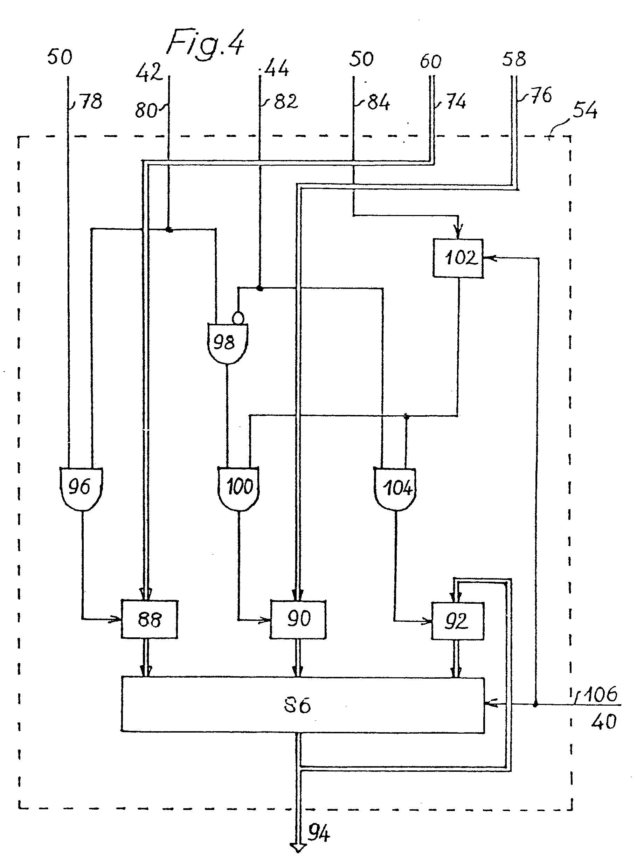

On décrit maintenant plus spécifiquement ce traitement des signaux de non-corrélation, en référence à la figure 4. Le circuit 54 reçoit, par l'entrée 74, les données du $j+1^{\text{ème}}$ bloc de données, lorsqu'il constitue le $j^{\text{ème}}$ registre de la série 52, 54, 56. En fait, il reçoit toujours le signal correspondant au bloc de données comparé au bloc de référence, mais le circuit 88 ne laisse passer les données que pendant le $j+1^{\text{ème}}$ bloc de données. Le registre 54 reçoit aussi les données du bloc de référence par une entrée 76. Le circuit 54 reçoit aussi des signaux de commande. Ceux-ci comprennent un premier signal parvenant à l'entrée 78 et provenant du compteur 50, ce signal indiquant que l'appareil assure le traitement du $j+1^{\text{ème}}$ bloc de la tranche, c'est-à-dire du $j^{\text{ème}}$ bloc suivant le bloc de données de référence. L'entrée 80 transmet le signal de sortie de la porte 42, c'est-à-dire le signal global de corrélation mis à jour pendant le bloc en cours de comparaison. L'entrée 82 reçoit le signal global de corrélation provenant de la mémoire 44, c'est-à-dire correspondant au bloc précédent celui qui est en cours de traitement. L'entrée 84 reçoit un autre signal du compteur 50, ce signal indiquant que l'appareil est passé au traitement du $j+2^{\text{ème}}$ bloc de données de la tranche.

Le circuit 54 comprend essentiellement un registre circulant 86 qui peut recevoir des données d'entrée par l'intermédiaire de trois circuits 88, 90 et 92 qui sont des circuits portes mais qu'on a représentés sous forme de rectangles afin d'indiquer qu'ils transmettent des données de non-corrélation correspondant à un bloc de données en fonction d'un signal de commande.

Lorsque le compteur 50 indique par l'entrée 78 que l'appareil commence à traiter le $j^{\text{ème}}$ bloc de données suivant le bloc de référence, le circuit 54 étant destiné à contenir les données de non-corrélation de ce bloc, la porte intersection 96 est préparée et, lorsqu'un signal mis à jour de corrélation, parvenant de la porte 42 par l'intermédiaire de l'entrée 80, passe à un niveau élevé, la porte 96 est ouverte et transmet un signal de commande au circuit porte 88 qui provoque le chargement dans le registre 86 de données correspondant au $j^{\text{ème}}$ bloc de données suivant le bloc de référence, par l'intermédiaire de l'entrée 74. Lorsque ce $j^{\text{ème}}$ bloc de

données suivant le bloc de référence est terminé, le compteur 50 ne transmet plus de signal par l'entrée 78 si bient que les portes 96 et 88 restent fermées.

Pendant les blocs suivants de données, les données de non-corrélation conservées dans le registre doivent être remises à jour. A cet effet, elles circulent par l'intermédiaire d'un circuit porte 96, sous la commande des signaux provenant par l'entrée 106 du microprocesseur 40. De nouvelles données sont imbriquées à celles qui sont conservées dans le registre 86 par l'intermédiaire d'un circuit porte 90, lorsque le signal local de corrélation d'un bloc postérieur est à un niveau élevé alors que le signal global de corrélation formé antérieurement était à un niveau faible. A cet effet, le registre 86 reçoit donc soit les données qu'il conserve déjà par l'intermédiaire du circuit porte 96, commandé par une porte intersection 104, soit des données du bloc de référence, transmises par le circuit porte 90 sous la commande d'une porte intersection 100.

Lorsque le nouveau signal global de corrélation parvenant du circuit porte 42 par l'entrée 80, et l'ancien signal global 44 de corrélation parvenant par l'entrée 82 diffèrent et indiquent ainsi que des données du bloc de référence doivent être imbriquées dans celles que contient le registre 86, les deux signaux globaux de corrélation correspondant au bloc en cours et au bloc précédent parviennent à une porte intersection 98, mais le signal global correspondant au bloc précédent subit d'abord une inversion si bien que la porte ne transmet un signal à la porte 100 que lorsque les données du bloc de référence doivent réellement être imbriquées dans les données contenues dans le register 86. Lorsque la porte 98 transmet un signal à la porte intersection 100, celle-ci s'ouvre uniquement lorsqu'elle reçoit un signal de niveau élevée d'un circuit porte 102. Celui-ci ne transmet un signal de niveau élevé que lorsqu'il a reçu du compteur 50, par l'intermédiaire de l'entrée 84, un signal indiquant que l'appareil traite un bloc postérieur au j+1$^{ème}$ bloc de la tranche, c'est-à-dire lorsque des données initiales de non-corrélation ont été chargées et doivent être remises à jour. Ce circuit 102, lorsqu'il a été établi afin qu'il transmette un signal de niveau élevé, reste établi par un signal du microprocessur.

Lorsque le signal global de corrélation correspondant au bloc précédant celui qui est en cours de comparaison est déjà à un niveau élevé, ce signal, transmis par l'entrée 82 et provenant de la mémoire 44, permet l'ouverture de la porte 104, lorsque celle-ci reçoit un signal de la porte 102, c'est-à-dire lors du traitement des blocs de données suivant le j+1$^{ème}$. Dans ces conditions, la porte 104 provoque l'ouverture du circuit porte 92 et la circulation des données de non-corrélation du registre 86. Les données transmises par les deux circuits portes 90 et 92 s'imbriquent car ces deux circuits ne peuvent pas être ouverts simultanément puisque leurs portes de commande 100 et 102 ne peuvent être ouvertes l'une que lorsque le signal de la mémoire 44 est à son niveau faible et l'autre que lorsque le signal de la mémoire 44 se trouve à un niveau élevé. Ainsi, à la fin d'une tranche, la sortie 94 du circuit 54 peut transmettre les données de non-corrélation du bloc de données correspondant sous forme d'une série de données collées les unes aux autres et représentant les données du bloc correspondant quie correspondent aux moments où le signal global final de corrélation de la tranche se trouve à son niveau élevé.

De cette manière, à la fin d'une tranche, les différents registres 52, 54, 56 comprennent les données de non-corrélation des différents blocs, et, lorsque le microprocesseur 40 a déterminé la fin de la tranche, il commande la transmission des données du bloc de référence conservées dans la mémoire 32, par l'intermédiaire du circuit 48 d'aiguillage et du circuit porte 66, des données de non-corrélation, par l'intermédiaire du convertisseur numérique-analogique 62, et du signal de corrélation contenu dans la mémoire 44 à un circuit 64 qui forme le signal résultant représentant la tranche et le transmet à une ou plusieurs têtes 70 d'enregistrement d'un dispositif entraîné par un moteur 68 qui est luimême commandé par le microprocesseur 40.

Une tranche peut être interrompue de différentes manières. D'abord, lorsque tous les registres 52, 54, 56 ont été remplis, le microprocesseur commande l'interruption de la tranche et la transmission des données du bloc de référence, du signal de corrélation et des données de non-corrélation, et, pendant cette opération, il charge dans l'autre mémoire 34 le premier bloc qui doit former le bloc de référence de la tranche suivante.

Cependant, il peut arriver qu'un bloc de données reçu diffère beaucoup du bloc de référence. Dans ce cas, il convient que le microprocesseur 40 interrompe la tranche avant ce bloc très différent qui peut constituer alors le bloc de référence d'un tranche suivante. A cet effet, chaque bloc reçu est conservé dans la seconde mémoire 34 afin qu'il puisse former ce nouveau bloc de référence. Il est alors important que la mémoire 44 soit en réalité formée par deux mémoires afin qu'elle conserve encore le signal global de corrélation correspondant au bloc précédent et permette ainsi la transmission du signal représentant la tranche précédent. L'appareil comprend à cet effet un circuit non représenté qui accumule simplement le temps pendant lequel le signal du comparateur 36 est à un niveau élevé et qui indique le moment où ce temps dépasse un seuil fixé. Un tel circuit n'est pas représenté par raison de clarté mais le microprocesseur peut remplir luimême cette fonction.

Il peut être commode que, à la fin d'une tranche, l'ensemble des données de non-corrélation ait une longueur déterminée, correspondant par exemple à lu quantité comprise dans un bloc de données. A cet effet, le microprocesseur peut commander le passage à un niveau élevé du signal global de corrélation de la mémoire 44, de façon arbitraire afin que, par exemple, les registres 52, 54, 56 soient remplis au maximum de leur capacité. Cette caractéristique est une simple commodité pour le traitement et elle peut être facilement commandée par un circuit convenable ou mise en oeuvre par le microprocesseur 40 sous la commande de son programme. A cet effet, il est commode que l'appareil comprennent un circuit non représenté qui accumule le temps pendant lequel le signal global de corrélation est à son niveau élevé.

Il peut parfois arriver que, sans que les blocs de données diffèrent beaucoup du bloc de référence, les différences soient cependant plus importantes que celles qui permettent la conservation des données de non-corrélation dans les registres 52, 54, 56 à raison d'un registre par bloc de données. Dans ce cas, le microprocesseur peut commander la conservation des données de non-corrélation dans plusieurs registres pour un seul bloc de données, par exemple deux registres, le nombre maximal de blocs de données de la tranche étant alors réduit d'un nombre égal à moitié du nombre de registres.

Le signal représentant la tranche et finalement transmis par le circuit 64 à l'appareil d'enregistrement 68, 70 comprend donc le bloc de données de référence provenant de la mémoire 32, les données de non-corrélation provenant des registres 52, 54, 56 et le signal global de corrélation provenant de la mémoire 44. Cependant, étant donnée que les tranches peuvent comprendre des blocs de données en nombres très différents, il est souhaitable que le signal représentant la tranche comprenne des informations supplémentaires. Ces informations supplémentaires peuvent être constituées par des informations codées indiquant le nombre de blocs de données ayant donné lieu à la formation de données de non-corrélation, et un signal de l'horloge 38 peut aussi être transmis afin que, lors de la lecture, il facilite les opérations de reconstitution des différents blocs de données. Le signal peut aussi comprendre en outre des données de synchronisation ou autres qui ont été séparées par le circuit 28 et qui sont transmises directement ou plutôt par l'intermédiaire d'une mémoire convenable, au circuit 64 qui forme le signal final.

On considère maintenant la mise en oeuvre de l'appareil du mode de réalisation des figures 2 à 6, lors de la restitution ou de la lecture du signal enregistré comme décrit précédemment, en référence aux figures 2 et 3.

Les compsants nécessaires à le lecture sont seuls représentés sur les figures 5 et 6, car certains sont superflus, par exemple le compratuer 36, éventuellement le compteur 50, un convertisseur analogique-numérique, ... Sous la commande du microprocessuer 40, le moteur 68 entraîne la bande qui porte le signal représentant la tranche et la transmet par l'intermédiaire des têtes 70 au circuit 28 de séparation qui assure par exemple la séparation de données de synchronisation, etc. Le signal représentant la tranche est alors transmis au circuit 30 d'aiguillage qui, sous la commande du microprocesseur 40, assure la transmission du bloc de référence à une première mémoire 32 et des données de non-corrélation au circuit d'aiguillage 48 et au convertisseur analogique-numérique 58 qui transmet alors successivement les données de non-corrélation aux registres 52, 54, 56, sous la commande du microprocesseur. Le premier bloc de données constituant le bloc de référence peut être transmis aussi directement au circuit 48 d'aiguillage qui le transmet au circuit 64 de sortie puis au moniteur convenable de télévision, après addition des données de synchronisation. Chque bloc ultérieur est ensuite reconstitué par transmission de données imbriquées provenant soit de la mémoire 32, par l'intermédiaire du circuit 48 d'aiguillage et du circuit porte, soit d'un registre 52, 54, 56 par l'intermédiaire du convertisseur numérique-analogique 62. Ainsi, toutes les images sont reconstituées les unes parès les autres.

La commande de l'imbrication des données de non-corrélation et des données du bloc de référence est assurée par le microprocesseur 40 qui reçoit le signal de corrélation, conservé dans la mémoire 44, en provenance du circuit 28, et des signaux provenant de l'horloge 38. Celle-ci reçoit avantageusement le signal de corrélation provenant du circuit 28 lorsque des données d'horloge sont superposées à ce signal global de corrélation.

On note sur les figures 2 et 3 d'une part et 5 et 6 d'autre part que l'appareil a presque la même configuration en mode d'enregistrement et en mode de lecture. Les connexions qui doivent être modifiées sont en petit nombre et comprennent notamment la connexion des têtes 70 soit au circuit 64, soit au circuit 28, la connexion de la sortie du circuit 64 soit aux têtes 70, soit au moniteur utilisé pour la lecture, etc. En particulier, en mode de lecture, les composants inutilisés peuvent être déconnectés.

Le mode de réalisation qu'on a décrit jusqu'à présent assure le traitement des données partiellement sous forme analogique et partiellement sous forme numérique. En effet, de l'entrée de l'appareil jusqu'aux convertisseurs analogiques-numériques 58, 60, et du convertisseur numérique-analogique 62 jusqu'au dispositif d'enregistrement 68, 70, l'appareil traite des signaux analogiques. Cependant, entre les convertisseurs analogiques-numériques 58, 60 et le convertisseur numérique-analogique 62, les données ont été considérées comme étant sous forme numérique, notamment pour leur conservation dans les registres 52, 54, 56.

Cependant, on sait que la dégradation des signaux conservés est bien plus faible lorsque les signaux sont traités entièrement sous forme numérique. En effet, les perturbations qui peuvent être introduites dans l'appareil et qui, dans le cas d'un signal analogique, provoquent un changement de niveau donc une modification des données conservées, ne provoquent, dans le cas de données numériques, qu'une perturbation des niveaux de signaux numériques qui peuvent être facilement rétablis au niveau d'origine. L'invention permet un traitement entièrement numérique des signaux, l'appareil comprenant alors un convertisseur analogique-numérique de puissance convenable de préférence juste en amont du circuit d'aiguillage 30. Tout le reste de l'appareil, y compris l'enregistrement assuré par les têtes 70, est alors réalisé sous forme numérique, les composants utilisés ayant des fonctions analogues à celles qu'on a décrites en référence aux figures 2 à 6, mais évidemment, les convertisseurs 58, 60, 62 sont supprimés puisqu'ils sont remplacés par un convertisseur d'entrée placé en amont du circuit 30 et un convertisseur de sortie disposé entre le circuit 64 de sortie et le moniteur de télévision par exemple. Dans ce cas, il peut être souhaitable que les signaux séparés par le circuit 28 soient réintroduits dans le signal représentant la tranche non pas au niveau du circuit 64 de sortie, mais juste après la sortie du convertisseur numérique-analogique et avant le moniteur.

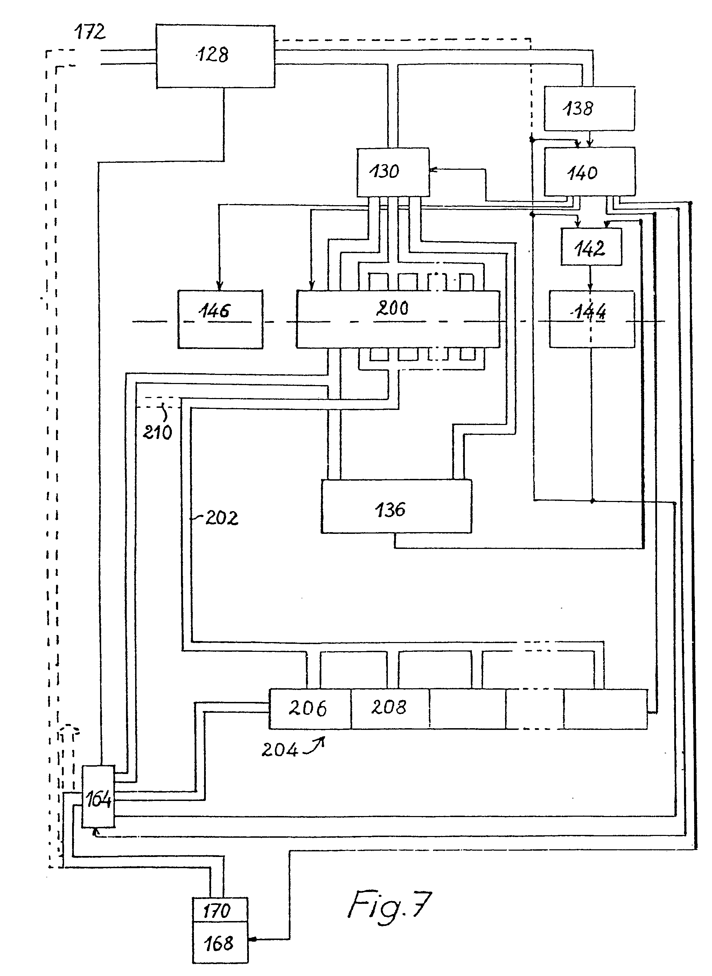

Cependant, l'appareil, puisqu'il reçoit des signaux sous forme analogique, peut aussi les traiter entièrement sous forme analogique. La figure 7 représente un second mode de réalisation de l'invention qui assure ce traitement purement analogique. La figure 7 représente les principaux composants d'un appareil destiné au traitement sous forme purement analogique de signaux vidéo. Cet appareil comprend essentiellement un circuit 128 destiné à séparer éventuellement les composantes du signal qui ne doivent pas être traitées, par exemple des composantes de synchronisation, un circuit 130 d'aiguillage, un comparateur 136, une horloge 138, un organe de commande 140, par exemple un microprocesseur, un circuit porte 142, une mémoire 144 de corrélation, un moteur 146 de commande de mémoire, un circuit 164 de sortie, un moteur d'enregistreur 168 et des têtes de lecture'écriture 170. Tous ces éléments sont analogues aux éléments correspondants décrits en référence aux figures 2 à 6 et ayant des références identiques mais sans chiffre de centaine. Cependant, l'appareil de la figure 7 présente des différences assez importantes par rapport à celui qu'on a décrit en référence aux figures 2 à 6. Ainsi, il comprend une mémoire 200 destinée à conserver la totalité de tous les blocs de données de la tranche, jusqu'au traitement convenable de tous ces blocs qui sont alors remplacés par les blocs de la tranche suivante. Ainsi, le circuit 130 d'aiguillage transmet le premier bloc de données d'une tranche à une ou plusieurs pistes du tambour magnétique constituant la mémoire 200, puis, successivement, à d'autres pistes, tous les blocs de données de la tranche. Le circuit 130 d'aiguillage transmet aussi directement chaque bloc suivant le bloc de référence au comparateur 36 qui reçoit aussi le bloc choisi comme bloc de référence (et qui n'est pas obligatoirement le premier), le comparateur 136 transmettant alors son signal de sortie au circuit porte 142 et à la mémoire 144 qui assure la formation du signal de corrélation comme décrit précédemment en référence au mode de réalisation des figures 2 à 6. Cependant, ce traitement peut être différent et le signal de corrélation de tous les blocs peut être formé en une seule fois par comparaison, dans un comparateur 136 de plus grande capacité, de tous les blocs simultanément dès que le dernier bloc de la tranche a commencé à parvenir à la mémoire 200, dans une variante.

Lorsqu'une tranche est interrompue, par exemple dans les cas déjà décrits en référence au mode de réalisation des figures 2 à 6, les blocs de données de la tranche suivante peuvent être enregistrés à la suite des blocs déjà contenus dans la mémoire 200 pendant que ceux-ci permettent l'extraction de données ou sont éventuellement effacés. Lorsque le signal global final de corrélation de la mémoire 144 a été formé, pendant un tour du tambour formant la mémoire 200, sous la commande du moteur 146, les données du bloc de référence sont transmises au circuit 164 de sortie, le signal global de corrélation de la mémoire 144 est transmis à ce circuit 164 de sortie, et les données de non-corrélation sont formées dans un registre analogique 204. Ce registre 204 est chargé de la manière suivante. Lorsque le signal global final de corrélation est à un niveau élevé, le microprocesseur 140 commande la transmission simultanée par toutes les pistes de la mémoire 200 qui comprennent des blocs de données de la tranche considérée, sauf éventuellement le bloc de référence, à des parties séparées 206, 208, ... d'un registre analogique 104, par l'intermédiaire de lignes parallèles indiquées par la référence 202. Lorsque le signal final global de corrélation a un faible niveau, le microprocesseur 140 empêche évidemment la transmission des données de la mémoire 200 si bien que les parties 206, 208, ... du registre 204 ne se remplissant pas. Chacune des parties 206, 208, ... contient les données de non-corrélation d'un seul bloc de données. Lorsque les données de non-corrélation des différents blocs ont été tirées de la mémoire 200 et transmises aux parties 206, 208, ... du registre 204, les pistes de la mémoire 200 peuvent être effacées ou non avant le traitement des blocs de données d'un autre tranche. Les données de non-corrélation contenues dans le registre 204 sont donc introduites simultanément en parallèle dans les différentes parties 206, 208, ... et elles sont ensuite extraites vers le circuit 164 de sortie sous forme de données série. De tels registres 204 qui permettent l'entrée parallèle de données et leur sortie série sont bien connus dans la techniques. Il s'agit avantageusement de dispositifs à couplage par transfert de charge, par exemple d'un type commercialisé par la société Tekelec.

Dans la description qui précède, on note que le signal de données du bloc de référence et le signal global de corrélation sont transmis avant les données de non-corrélation correspondantes. Lorsqu'on veut enregistrer parallément sur une même bande les trois types de signaux, avec en plus éventuellement des données d'horloge et de synchronisation et éventuellement des données sonores, il est souhaitable cependant que les données du bloc de référence et que le signal global de corrélation de la mémoire 144 ne soient transmis qu'au tour suivant du tambour formant la mémoire 200 ainf que les trois types de signaux soient transmit simultanément. Il fait d'ailleurs noter que, dans ce mode de réalisation de la figure 7, la mémoire 200 et la mémoire 144 peuvent être formées par un seul tambour magnétique ayant plusieurs têtes, cette disposition facilitant le traitement des signaux car le microprocesseur peut commander l'enregistrement des blocs de données et des signaux de corrélation sur un grand nombre de pistes différentes et quelconques.

Lorsque l'appareil de la figure 7 est utilisé pour la lecture de données qui ont été enregistrées sur une bande magnétique comme décrit précédemment, le microprocesseur 140 provoque le fonctionnement du moteur 168 et les têtes 170 transmettent, par le trajet indiqué en traits interrompus, le signal représentant la tranche qui constitue le signal 172 d'entrée du circuit 128. Celui-ci, comme indiqué par le trait interrompu, fait parvenir le signal de corrélation à la mémoire 144, par le circuit porte 142 par exemple, et il transmet au circuit 130 d'aiguillage les données qui sont alors réparties dans différentes pistes de la mémoire 200, une piste portant le bloc de référence dans son ensemble et d'autres pistes portant uniquement les données de non-corrélation. Le microprocesseur 140 commande alors la transmission successive par le circuit 164 du bloc de référence lorsque celui-ci est le premier bloc de la tranche, et de chacun des blocs reconstitués comprenant soit les données du bloc de référence lorsque le signal global de corrélation est à son niveau faible, soit les données de non-corrélation des différentes pistes successives lorsque le signal global de corrélation a son niveau élevé. Cette imbrication des données est représentée schématiquement sur la figure 7 par le trajet en traits interrompus 210, mais il faut noter que cette imbrication est obtenue facilement à l'aide de circuits portes commandés par le microprocesseur 140. De cette manière, les signaux vidéo des différents blocs de données sont reconstitués sans aucune difficulté. Le circuit 164 ajoute éventuellement des signaux supplémentaires tels que des données de synchronisation, etc.

Le mode de réalisation de la figure 7 qu'on a décrit comme fonctionnant d'une manière purement analogique, peut aussi être réalisé sous forme purement numérique, mais dans ce cas, la séparation des données de synchronisation et d'autres données éventuellement et la conversion analogique-numérique doivent être réalisées en amont du circuit 128, ou, lorsque celui-ci assure ces fonctions, il faut que le signal renvoyé par les têtes 170 lors de la lecture parvienne en aval de ce circuit 128. Par ailleurs, le fonctionnement du circuit est identique à celui qu'on a décrit on référence à la figure 7. Un convertisseur numérique-analogique est monté en amont du moniteur de télévision qui reçoit le signal reconstitué.

Il faut aussi noter un avantage important permis par l'invention. On sait que les signaux de télévision contiennent le plus souvent des parasites apparaissant de façon aléatoire, et notamment un "souffle". Etant donné que ces parasites font apparaître des "différences" entre les images comparées, ils font passer le signal de corrélation à l'état qui provoque la conservation de données de non-corrélation; dans le cas de signaux très perturbés, ils peuvent être à l'origine de la conservation de la plus grande partie des données de non-corrélation, d'une façon tout à fait superflue. L'invention permet de remédier à cet inconvénient. En effet, comme tous les signaux d'une tranche sont comparés à un signal de référence, une condition simple permet l'élimination des parasites de toutes les images, sauf la première et la dernière de la tranche. Cette condition est que le signal local de corrélation doit indiquer une différence pour deux signaux de la tranche au moins, et de préférence pour deux signaux consécutifs. Cette condition élimine toutes les modifications qui n'apparaissent que sur une image de la tranche. Elle n'est pas gênante en pratique car l'oeil ne permet pas l'intégration consciente par le spectateur d'informations présentées pendant un temps de 1/25 seconde.

La figure 8 est un diagramme d'un circuit qui peut être utilisé dans l'appareil décrit en référence à la figure 7, pour l'élimination de la remise à jour du signal de corrélation par des parasites. Le signal de l'image considérée, transmis par le fil 212, parvient à un comparateur 218 avec le signal de l'image précédente ou de l'image de référence, transmise par le fil 214. Compte tenu de la valeur de seuil utilisée pour la comparaison, le comparateur 218 transmet un signal de niveau 1 si la différence entre les signaux est supérieure à la valeur de seuil et un signal de niveau 0 dans le cas contraire. Un comparateur 220 reçoit de même les signaux des fils 214 et 216 correspondant d'une part à l'image de référence ou à l'image précédant l'image considérée et d'autre par à l'image suivant celle-ci. Une porte intersection 222 reçoit les signaux de sortie des deux comparateurs 218 et 220. Ainsi, le signal de sortie de la porte 222 ne permet la remise à jour du signal de corrélation que lorsque les signaux des fils 214 et 216 diffèrent suffisamment.

Bien entendu, le traitement qu'on vient de décrire en référence à la figure 8 nécessite, pour la formation du signal de corrélation de l'image considérée, que le signal de l'image suivante soit aussi reçu. Un retard d'une image, soit 1/25 s, est donc introduit et les données de non-corrélation ne sont donc formées qu'avec un retard de 1/25 s. Cette caractéristique n'est cependant pas du tout gênante dans l'application aux magnétoscopes par exemple.

Les différents circuits et composants qu'on a cités dans la description qui précède des appareils sont bien connus des hommes du métier et il en existe actuellement sur le marché de nombreux types dont les caractéristiques sont bien connues et dont la fiabilité a été éprouvée. On ne les décrit donc pas en détail car, pour chacune des fonctions citées, il existe de nombreux types de dispositifs différents.

Dans la description qui précède, on a considéré que le signal traité était formé de "blocs de données", mais la principale application de cet appareil est évidemment le traitement et la conservation des signaux de télévision. Dans ce cas, il faut évidemment que l'appareil comprenne des circuits spécifiques qui séparent les données sonores et les enregistrent en même temps que les données représentant la tranche. En outre, dans le cas des signaux normalisés SECAM, il convient de traiter convenablement les signaux de chrominance qui sont transmis en alternance et non simultanément. Il s'agit cependant d'une technique bien connue des hommes du métier et on ne décrit donc pas ces caractéristiques.

Par ailleurs, l'appareil peut comporter un perfectionnement. Lorsqu'un programme de télévision comporte un grand nombre de parties sous forme de panoramiques rapides, de fondu-enchaîné, etc., les blocs de données ou images successives diffèrent beaucoupe et il est parfois préférable que tous les blocs de données soient conservés. Dans ce cas, l'appareil peut devoir assurer l'enregistrement ou la transmission de tous les blocs de données, dans leur totalité, pendant un certain temps. Le signal global de corrélation ne présente alors aucun intérêt et le microprocesseur 140 peut être programmé de manière que, lorsque les blocs de données sont enregistrés intégralement successivement, le signal global de corrélation soit supprimé. Il s'agit cependant d'une caractéristique qui est loin d'être nécessaire car d'une part les programmes de télévision qui comportent beaucoup de panoramiques rapides, etc. sont très rares, et d'autre part l'expérience montre que, même dans le cas de ces panoramiques rapides, les tranches peuvent comprendre souvent 4, 5, 6 blocs de données et plus sans que la capacité des registres contenant les données de non-corrélation soit dépassée.

Dans le cas d'un programme de télévision ne comprenant aucun panoramique ou aucun plan dans lequel le nombre de données changeant d'un bloc de données au suivant est très important, les tranches du signal comportent avantageusement de 40 à 50 blocs, c'est-à-dire que les registres 52, 54, 56 sont au nombre de 39 à 49 par exemple, ou le registre 204 a un nombre correspondant d'entrées. Dans ce cas, la durée d'une tranche est de l'ordre de 1,6 à 2 s. L'exérience montre que, dans un programme de télévision normal, ce nombre de blocs de données de 40 à 50 donne lieu à des données de corrélation qui, ensemble, forment une quantité de données inférieure aux données du bloc de référence. En conséquence, ces 40 ou 50 blocs de données peuvent être enregistrés sur une surface de bande correspondant à deux blocs de données, additionnés de la surface nécessaire à l'enregistrement du signal global de corrélation. Celui-ci qui est normalement un signal à deux niveau seulement, peut être superposé à un signal d'horloge, de manière bien connue, et toutes les données d'une tranche peuvent alors être conservées dans quatre pistes parallèles, l'une comprenant le bloc de référence, une autre les données de non-corrélation, une autre le signal de corrélation et les données d'horloge et éventuellement de synchronisation et une autre la partie sonore du programme correspondant à la tranche. La réduction de durée de programme qui est alors obtenue est de l'ordre de 10 à 15 s. Dans le cas de magnétoscopes, cette réduction permet alors l'utilisation de bandes magnétiques de largeur inférieure à celle qui est utilisée actuellement (12,7 mm). La technologie de la fabrication de ces bandes magnétiques de faible largeur est bien au point et le coût des bandes en bobines ou en cassettes est faible.

Ainsi, l'invention s'applique aux magnétoscopes et aux lecteurs de vidéodisques et elle permet une réduction considérable de la surface de support d'enregistrement nécessaire à la conservation des signaux et notamment des programmes de télévision, si bien qu'elle permet la constitution de bibliothèques de programmes à un coût très faible, correspondant au coût de la constitution actuelle d'une discothèque purement sonore.

Une autre application importante de la compression de données selon l'invention est la transmission par satellites. Dans ce cas aussi, la concentration très importante des signaux présente un grand avantage car elle permet la réduction du temps très coûteux d'utilisation d'un satellite. Il faut cependant noter que, étant donné que les "tranches" représentent un temps de programme de l'ordre d'une ou deux secondes, la restitution du programme doit suivre l'émission avec un retard de cet ordre de grandeur au moins. Dans le cas de la visio-conférence, c'est-à-dire d'une transmission bilatérale, les retards présentés dans les deux sens doivent être ajoutés, si bien que le nombre d'images des tranches peut devoir être limité afin que le décalage ne soit pas excessif. Dans le cas de la transmission de programmes, ce retard est de peut d'importance, car un retard qui atteindrait 5, 10 ou même 20 s n'empêche pas le bénéfice de tous les avantages de la transmission "en direct".

La transmission peut être effectuée soit dans une bande de fréquences de largeur réduite, soit dans une bande de largeur normale ou analogue. Dans le cas d'une bande de largeur réduite, la qualité de l'image doit subir une certaine dégradation lorsque le nombre d'images des tranches diminue. Ce problème se pose dans le cas de tous les systèmes de concentration de données. Selon l'invention, l'acuité de ce problème peut être réduite notablement par adaptation automatique de la valeur de seuil utilisée pour la comparaison des images à l'image de référence en fonction du temps cumulé pendant lequel le signal de corrélation ou le signal global de corrélation correspondant à l'image précédente a son état qui indique des différences entre les images comparées. La "dégradation" de qualité varie alors au cours de la tranche et, au début de chaque tranche, les premières images ont toujours une bonne qualité.

Lorsque la transmission est effectuée dans une bande de fréquences de largeur normale, plusieurs programmes ou signaux sont multiplexés dans la même bande et comme l'invention permet une compression de données plus grande que celle des systèmes connus, elle permet une compensation meilleure entre un plus grand nombre de signaux transmis. En effet, chaque signal occupant moins de temps d'émission, les "à-coups" des différents programmes peuvent être encaissés par un plus grand nombre de programmes; il n'est plus nécessaire que la qualité de l'image soit parfois dégradée, surtout qu'une bande de garde de très faible largeur peut aussi être avantageusement prévue.

Bien entendu, l'invention s'applique aussi à toutes les opérations de transmission et d'enregistrement de signaux de télévision et notamment à la télévision par câbles et à l'enregistrement sur vidéodisques, les problèmes posés étant résolus de la même manière que décrit précédemment pour la transmission par satellites et pour les magnétoscopes, respectivement.

Il est bien entendu que l'invention n'a été décrite et représentée qu'à titre d'exemple préférentiel et qu'on pourra apporter toute équivalence technique dans ses éléments constitutifs sans pour autant sortir de son cadre. De même, la terminologie utilisée ne constitue qu'une possibilité de description, et elle doit être considérée de façon relativement large. Ainsi, la description qui précède indique que le signal de corrélation est mis dans un autre état lorsque la relation prédéterminée entre les signaux comparés de données n'est pas vérifiée, par exemple lorsque la différence entre ces signaux comparés dépasse une valeur de seuil. On doit considérer dans le présent mémoire que cette condition est satisfaite même si le signal de corrélation n'est pas mis dans son autre état lorsque la non vérification de la relation prédéterminée est due à la présence de parasites, par exemple du souffle, comme décrit précédemment en référence à la figure 8.

**Revendications**

1. Procédé de compression de données représentées par un signal qui peut être découpé en tranches comprenant chacune au moins trois blocs de données, la plus grande partie des données d'un bloc étant sensiblement identiques aux données correspondantes d'un bloc adjacent ou voisin, ledit procédé étant du type qui comprend, pour une tranche au moins du signal, la comparaison au signal de données correspondant à un bloc, considéré comme bloc de référence, de chaque signal de données représentant un autre bloc de la tranche, et étant caractérisé en ce qu'il comprend:

— la formation d'un signal global de corrélation qui ne peut avoir un premier état que lorsque les données correspondantes du signal de données représentant le bloc de référence et de chacun des signaux de données représentant un autre bloc, présentent une relation prédéterminée, et qui a un autre état au moins lorsque les données correspondante d'un nombre minimal au moins des signaux de données représentant d'autres blocs et du signal de données du bloc de référence ne présentent pas ladite relation prédéterminée,
— la formation de signaux de données de non-corrélation au moins pour certains blocs de la tranche, le signal de données de non-corrélation d'un bloc ne comprenant que les données du signal représentant ce bloc qui correspondent au fait que le signal global de corrélation a son autre état, et
— la formation d'un signal représentant la tranche et comprenant les données du signal représentant le bloc de référence, du signal global de corrélation et des signaux de données de non-corrélation.

2. Procédé selon la revendication 1, caractérisé en ce que ledit nombre minimal de signaux de données est égal à 1.
3. Procédé selon l'une des revendications 1 et 2, caractérisé en ce qu'il comprend, avant ou pendant l'étape de comparaison, la mémorisation des signaux de données représentant tous les blocs de la tranche.

4. Procédé selon l'une quelconque des revendications 1 à 3, caractérisé en ce que la formation d'un signal global de corrélation est progressive et comprend la formation d'un signal local de corrélation qui n'a un premier état que lorsque les données correspondantes du signal de données représentant le bloc de référence et du signal de données représentant un autre bloc présentent le relation prédéterminée, et qui a un autre état au moins lorsque les données correspondantes ne présentent pas ladite relation prédéterminée, et la formation d'un signal mis à jour de corrélation qui n'a un premier état que lorsque le signal mis à jour de corrélation correspondant au bloc précédant l'autre bloc et le signal local de corrélation ont tous deux leur premier état.

5. Procédé selon la revendication 3 prise seule ou avec la revendication 4, caractérisé en ce qu'il comprend la transmission en parallèle des signaux de données de non-corrélation des différents blocs, et leur mise sous forme série.

6. Procédé selon l'une quelconque des revendications précédentes, caractérisé en ce que le bloc de référence est le premier de la tranche.

7. Procédé selon l'une quelconque des revendications précédentes, caractérisé en ce qu'il comprend en outre la mise à son autre état du signal global de corrélation, même lorsque les données correspondantes de tous les blocs satisfont à la relation prédéterminée, afin que ce signal global de corrélation ait son autre état pendant une fraction déterminée d'un bloc de données.

8. Procédé selon l'une quelconque des revendications précédentes, caractérisé en ce qu'il comprend l'interruption de la tranche afin que la fraction d'un bloc de données pendant laquelle le signal de corrélation a son autre état reste inférieure à une valeur déterminée.

9. Procédé selon la revendication 8, caractérisé en ce que la valeur déterminée dépend du nombre de blocs déjà compris dans la tranche.

10. Procédé selon l'une quelconque des revendications précédentes, caractérisé en ce que la tranche est interrompue lorsque le nombre de blocs qu'elle contient est inférieur ou égal à une limite supérieure déterminée.

11. Procédé selon l'une quelconque des revendications précédentes, caractérisé en ce que, lorsque la comparaison indique que le bloc comparé est très différent du bloc de référence, le procédé comprend l'interruption de la tranche afin que le dernier bloc de celle-ci soit le bloc précédant le bloc comparé, celui-ci étant alors le premier de la tranche suivante.

12. Procédé selon l'une quelconque des revendications précédentes, caractérisé en ce qu'il comprend la formation du signal de données de non-corrélation pour tous les blocs de la tranche à l'exception éventuelle du bloc de référence.

13. Procédé selon l'une quelconque des revendications précédentes, caractérisé en ce que la relation prédéterminée que présentent deux signaux comparés dont le signal de corrélation a son premier état, est que la différence entre les deux signaux est inférieure à une valeur de seuil.

14. Procédé selon l'une quelconque des revendications précédentes, caractérisé en ce qu'il comprend l'inhibition de la mise à son autre état du signal global de corrélation lorsqu'un seul signal de données représentant un seul bloc de la tranche autre que le premier et le dernier bloc de la tranche, a des données qui ne présentent pas ladite relation prédéterminée avec les données correspondantes du bloc de référence.

15. Procédé selon l'une quelconque des revendications précédentes, caractérisé en ce que le signal qui peut être découpé en tranches est un signal vidéo, les blocs de données étant des images de ce signal.

16. Procédé selon l'une quelconque des revendications précédentes, caractérisé en ce qu'il comprend, avant le traitement du signal, l'extraction de certaines parties telles que des signaux de synchronisation, et l'addition de signaux supplémentaires, par exemple de synchronisation, au signal représentant la tranche.

17. Appareil de compression de données représentées par un signal qui peut être découpé en tranches comprenant chacune au moins trois blocs de données, la plus grande partie des données d'un bloc étant sensiblement identiques aux données correspondantes d'un bloc adjacent ou voisin, ledit appareil étant destiné à la mise en oeuvre d'un procédé selon l'une quelconque des revendications précédentes, et étant du type qui comprend:

— une mémoire (32) destinée à conserver au moins le signal de données d'un bloc, constituant un bloc de référence, et
— un comparateur (36) destiné à recevoir le signal de données du bloc de référence d'une part, et le signal de données d'au moins un autre bloc d'autre part et à former un signal de corrélation qui a un premier état lorsque les données correspondantes dans deux signaux comparés au moins présentent une relation prédéterminée et qui a un autre état lorsque les signaux ne présentent pas cette relation prédéterminée,

et étant caractérisé en ce qu'il comprend en outre:

— un circuit (42, 44) de formation d'un signal global de corrélation qui ne peut avoir un premier état que lorsque les données correspondantes du signal de données du bloc de référence et de chacun des signaux de données représentant un autre bloc, présentent ladite relation prédéterminée et qui a un autre état au moins lorsque les données correspondantes d'un nombre minimal au moins des signaux de données représentant d'autres blocs et du signal de données du bloc de référence ne présentent pas ladite relation prédéterminée,

— un organe de commande (40) destiné à recevoir le signal global de corrélation et à commander la transmission de signaux de données de non-corrélation comprenant des données représentant les blocs comparés uniquement lorsque le signal' global de corrélation a son autre état,

— un circuit d'aiguillage (48) destiné à recevoir les données des mémoires et dirigées vers le comparateur et à les transmettre vers une sortie ou des registres de mémoire (52, 54, 56), et

— une horloge (38) destinée à recevoir une partie au moins du signal qui peut être découpé en tranches et à créer des signaux d'horloge destinés à l'organe de commande (40) au moins.

18. Appareil selon la revendication 17, caractérisé en ce qu'il comprend une seconde mémoire (34) destinée à conserver au moins le signal de données de l'autre bloc qui est comparé au signal de données du bloc de référence.

19. Appareil selon l'une des revendications 17 et 18, caractérisé en ce qu'il comprend un circuit d'aiguillage (30) destiné à transmettre le signal qu'il reçoit soit à la mémoire du bloc de référence, soit au comparateur et éventuellement à la seconde mémoire.

20. Appareil selon la revendication 17, caractérisé en ce que la mémoire (20) conserve tous les blocs de données de la tranche.

21. Appareil selon l'une quelconque des revendications 17 à 20, caractérisé en ce que le circuit (42, 44) de formation d'un signal global de corrélation comprend au moins une mémoire (44) destinée à conserver le signal de corrélation.

22. Appareil selon la revendication 21, caractérisé en ce que le circuit (42) de formation d'un signal global de corrélation comprend un circuit porte qui reçoit le signal du comparateur et le signal de corrélation du bloc précédent et qui transmet le signal de corrélation du bloc en cours à la mémoire (44).

23. Appareil selon l'une des revendications 21 à 22, caractérisé en ce que la mémoire (32) contenant au moins un bloc de données et la mémoire (44) destinée à conserver le signal de corrélation sont formées par un seul support de mémoire.

24. Appareil selon l'une quelconque des revendications 17 à 23, caractérisé en ce qu'il comprend des registres de mémoire (52, 54, 56) destinées à contenir chacun les données de non-corrélation correspondant à au moins un bloc.

25. Appareil selon l'une quelconque des revendications 17 à 24, caractérisé en ce que l'organe de commande (40) est un microprocesseur.

26. Appareil selon l'une quelconque des revendications 17 à 24, caractérisé en ce que le circuit (42, 44) de formation d'un signal global de corrélation comprend un dispositif (218, 220, 222) destiné à empêcher la mise à un autre état du signal global de corrélation lorsqu'un seul signal de données représentant un seul bloc de la tranche, a des données qui ne présentent pas ladite relation prédéterminées avec les données correspondantes du bloc de référence.

27. Appareil selon l'une quelconque des revendications 17 à 26, caractérisé en ce qu'il comprend en outre un enregistreur (68, 70) à bande magnétique, ayant un moteur commandé par l'organe de commande (40).

28. Appareil de restitution d'un signal de télévision à partir d'un signal représentant une tranche et comprenant des données d'un signal représentant un bloc de référence, d'un signal global de corrélation et de signaux de données de non-corrélation, formé par compression de données par mise en oeuvre du procédé selon l'une quelconque des revendications 1 à 16, caractérisé en ce qu'il comprend:

— une première mémoire (32) destinée à contenir les données du signal représentant le bloc de référence,

— une seconde mémoire (52, 54, 56) destinée à contenir les signaux de données de non-corrélation,

— une troisième mémoire (44) destinée à contenir le signal global de corrélation,

— un organe de commande (40) destiné à recevoir le signal de corrélation et à commander la transmission de signaux de données de non-corrélation uniquement lorsque le signal global de corrélation a un certain état, et à commander la transmission du signal de données représentant le bloc de référence lorsque le signal global de corrélation a un autre état, et

— un circuit de sortie (64) destiné à combiner les données transmises à des données de synchronisation.

29. Appareil selon la revendication 28, caractérisé en ce que la mémoire (32) destinée à contenir les données du signal représentant un bloc de référence, et la mémoire (44) destinée à conserver le signal de corrélation sont formées par un seul support de mémoire.

**Patentansprüche**

1. Verfahren zur Kompression von Daten, welche in Form eines in Abschnitte unterteilbaren Signals dargestellt sind, wobei die Abschnitte wenigstens drei Datenblöcke enthalten und der größere Teil der Daten eines Blocks in wesentlichen gleich den entsprechenden Daten eines naheliegenden bzw. benachbarten Blockes ist, welches Verfahren für wenigstens einen Abschnitt des Signals einen Vergleich mit dem Signal der einem Block entsprechenden Daten umfaßt, und der Block als Referenzblock für jedes Signal von Daten, · welche einen anderen Block des Abschnittes darstellen, betrachtet wird, dadurch gekennzeichnet, daß das Verfahren folgende Schritte umfaßt:

Bilding eines globalen Korrelationssignales, welches einen ersten Zustand nur dann annimmt, wenn die korrespondierenden Daten des den Referenzblock bildenden Signales und jedes einen anderen Block darstellenden Signales einen vorbestimmten Zusammenhang aufweisen, und welches einem anderen Zustand wenigstens dann annimmt, wenn die korrespondierenden Daten einer minimalen Anzahl von wenigstens den andere Blöcke darstellenden Datensignalen und des den Referenzblock darstellenden Datensignales nicht diesen vorbestimmten Zusammenhang aufweisen,

Bildung von Nicht-Korrelationsdatensignalen für wenigstens gewisse Blöcke des Abschnittes, wobei das Nicht-Korrelationsdatensignal eines Blockes lediglich die Daten des diesen Block bildenden Signals umfaßt, welche dem Fall entsprechen, daß das globale Korrelationssignal seinen anderen Zustand annimmt, und

Bildung eines Signales, welches den Abschnitt darstellt und die den Referenzblock darstellenden Daten, die Daten des globalen Korrelationssignales und der Nicht-Korrelationsdatensignale umfaßt.

2. Verfahren nach Anspruch 1, dadurch gekennzeichnet, daß die genannte minimale Anzahl von Datensignal gleich 1 ist.

3. Verfahren nach Anspruch 1 oder 2, dadurch gekennzeichnet, daß es vor dem Vergleichsschritt oder während des Vergleichsschrittes die Speicherung der alle Blöcke des Abschnittes darstellenden Datensignale umfaßt.

4. Verfahren nach Anspruch 1, 2 oder 3, dadurch gekennzeichnet, daß die Bildung des globalen Korrelationssignales progressiv ist und die Bildung eines lokalen Korrelationssignales, welches einen ersten Zustand nur dann annimmt, wenn die korrespondierenden Daten des den Referenzblock bildenden Signales und jedes einen anderen Block darstellenden Signales den vorbestimmten Zusammenhang aufweisen und welches einen anderen Zustand wenigstens dann annimmt, wenn die korrespondierenden Daten nicht diesen vorbestimmten Zusammenhang aufweisen und die Bildung eines aktualisierten Korrelationssignales, welches einen ersten Zustand nur dann annimmt, wenn das dem dem anderen Block vorangehenden Block entsprechende aktualisierte Korrelationssignal und das lokale Korrelationssignal beide ihren ersten Zustand aufweisen, umfaßt.

5. Verfahren nach Anspruch 3 oder 3 und 4, dadurch gekennzeichnet, daß es die parallele Übertragung von Nicht-Korrelationsdatensignal verschiedener Blöcke und deren serielle Umsetzung umfaßt.

6. Verfahren nach einem der vorangehenden Ansprüchen, dadurch gekennzeichnet, daß der Referenzblock der erste Block des Abschnittes ist.

7. Verfahren nach einem der vorangehenden Ansprüche, dadurch gekennzeichnet, daß es darüberhinaus die Überführung des globalen Korrelationssignales in seinen anderen Zustand auch dann umfaßt, wenn die korrespondierenden Daten aller Blöcke den vorbestimmten Zusammenhang erfüllen, so daß das globale Korrelationssignal seinen anderen Zustand während eines vorbestimmten Bruchteiles eines Datenblockes annimmt.

8. Verfahren nach einem der vorangehenden Ansprüche, dadurch gekennzeichnet, daß es die Unterbrechung des Abschnittes umfaßt, so daß der Bruchteil eines Datenblockes, während dessen das Korrelationssignal seinen anderen Zustand annimmt, kleiner als ein vorbestimmter Wert bleibt.

9. Verfahren nach Anspruch 8, dadurch gekennzeichnet, daß der vorbestimmte Wert von der Anzahl der bereits im Abschnitt umfaßten Blöcke abhängt.

10. Verfahren nach einem der vorangehenden Ansprüche, dadurch gekennzeichnet, daß der Abschnitt unterbrochen wird, sobald die Anzahl der in ihm enthaltenen Blöcke kleiner oder gleich einer vorbestimmten Obergrenze ist.

11. Verfahren nach einem der vorangehenden Ansprüche, dadurch gekennzeichnet, daß, wenn der Vergleich ergibt, daß der verglichene Block sehr verschieden vom Referenzblock ist, das Verfahren die Unterbrechung des Abschnittes umfaßt, so daß der letzte Block desselben der dem verglichenen Block vorangehende block und dieser der erste Block des folgenden Abschnittes ist.

12. Verfahren nach einem der vorangehenden Ansprüche, dadurch gekennzeichnet, daß es die Bildung des Nicht-Korrelationsdatensignales für alle Blöcke des Abschnittes, mit der möglichen Ausnahme des Referenzblocks, umfaßt.

13. Verfahren nach einem der vorangehenden Ansprüche, dadurch gekennzeichnet, daß die vorbestimmte Beziehung zweier verglichener Signale, deren Korrelationssignal seinen ersten Zustand annimmt, darin besteht, daß die Differenz zwischen den beiden Signalen kleiner ist als ein Schwellenwert.

14. Verfahren nach einem der vorangehenden Ansprüche, dadurch gekenn-

zeichnet, daß die Überführung des globalen Korrelationssignales in seinen anderen Zustand verhindert wird, wenn ein einziges Datensignal, welches einen einzigen vom ersten und vom letzten Block des Abschnittes verschiedenen Block des Abschnittes darstellt, Daten enthält, welche nicht den genannten Zusammenhang mit den korrespondierenden Daten des Referenzblocks aufweisen.

15. Verfahren nach einem der vorangehenden Ansprüche, dadurch gekennzeichnet, daß das in Abschnitte unterteilbare Signal ein Videosignal ist, wobei die Blöcke Bilder dieses Signales sind.

16. Verfahren nach einem der vorangehenden Ansprüche, dadurch gekennzeichnet, daß vor der Signalverarbeitung einzelne Teile, wie z.B. die Synchronisationssignal, abgetrennt und dem den Abschnitt darstellenden Signal ergänzende Signale bzw. Hilfssignale, wie z.B. Synchronisationssignale, hinzugefügt werden.

17. Vorrichtung zur Kompression von Daten, welche in Form eines in Abschnitte unterteilbaren Signals dargestellt sind, wobei die Abschnitte wenigstens drei Datenblöcke enthalten und der größere Teil der Daten eines Blocks in wesentlichen gleich den entsprechenden Daten eines naheliegenden bzw. benachbarten Blockes ist, zur Durchführung des Verfahrens nach einem der vorangehenden Ansprüche, einer Bauart umfassend

— einen Speicher (32) zum Speichern wenigstens des Datensignales eines Blocks, welcher den Referenzblock darstellt,

— einen Komparator (36) zum Empfang des Datensignales des Referenzblocks einerseits und andererseits des Datensignales wenigstens eines anderen Blocks, sowie zur Bildung eines Korrelationssignales, welches einen ersten Zustand aufweist, wenn die entsprechenden Daten zweier miteinander verglichener Signale wenigstens einen vorbestimmten Zusammenhang aufweisen und welches einen anderen Zustand aufweist, wenn die Signale diesen vorbestimmten Zusammenhang nicht aufweisen und gekennzeichnet dadurch, daß sie darüberhinaus umfaßt,

— eine Schaltungsanordnung (42, 44) für die Bildung eines globalen Korrelationssignals, welches einen ersten Zustand nur dann annimmt, wenn die korrespondierenden Daten des den Referenzblock bildenden Signales und jedes einen anderen Block darstellenden Signales den genannten vorbestimmten Zusammenhang aufweisen, und welches einen anderen Zustand wenigstens dann annimmt, wenn die korrespondierenden Daten einer minimalen Anzahl von wenigstens den andere Blöcke darstellenden Datensignalen und des den Referenzblock darstellenden Datesignales nicht diesen vorbestimmten Zusammenhang aufweisen,

— eine Steuereinrichtung bzw. ein Schaltwerk (40) zum Empfang des globalen Korrelationssignals und zur Steuerung der Übertragung von Nicht-Korrelationssignalen, welche die verglichenen Blöcke darstellende Daten lediglich dann enthalten, wenn das globale Korrelationssignal seinen anderen Wert aufweist,

— eine Umschalteinrichtung (48) zum Empfang der dem Komparator zuzuführenden Speicherdaten und zur Übertragung auf einen Ausgang oder Speicherregister (52, 54, 56) und

— einen Taktgeber (38) zum Empfang wenigstens eines Teiles des in Abschnitte unterteilbaren Signales und zur Bildung von Taktsignalen wenigstens für die Steuereinrichtung bzw. das Schaltwerk (40).

18. Vorrichtung nach Anspruch 17, gekennzeichnet durch einen zweiten Speicher (34) zur Speicherung wenigstens des Datensignales des anderen Blocks, welches mit dem Datensignal des Referenzblockes verglichen wird.

19. Vorrichtung nach Anspruch 17 oder 18, gekennzeichnet durch eine Umschalteinrichtung (30) zur Übertragung des empfangenen Signales zu dem Speicher des Referenzblocks, oder zu dem Komparator und gegebenenfalls zu dem zweiten Speicher.

20. Vorrichtung nach Anspruch 17, dadurch gekennzeichnet, daß der Speicher (20) alle Datenblöcke des Abschnittes speichert.

21. Vorrichtung nach einem der Ansprüche 17 bis 20, dadurch gekennzeichnet, daß die Schaltungsanordnung (42, 44) für die Bildung des globalen Korrelationssignales wenigstens einen Speicher (44) zum Speichern des Korrelationssignales umfaßt.

22. Vorrichtung nach Anspruch 21, dadurch gekennzeichnet, daß die Schaltungsanordnung (42, 44) für die Bildung des globalen Korrelationssignales ein Torschaltung enthält, welche das Signal des Komparators und das Korrelationssignal des vorangehenden Blocks empfängt und das Korrelationssignal des gegenwärtigen Blocks auf den Speicher (44) überträgt.

23. Vorrichtung nach Anspruch 21 oder 22, dadurch gekennzeichnet, daß der Speicher (32), welcher wenigstens einen Datenblock enthält, und der Speicher (44) zum Speichern des Korrelationssignales von einem einzigen Speicherträger gebildet sind.

24. Vorrichtung nach einem der Ansprüche 17 bis 23, gekennzeichnet, durch Speicherregister (52, 54, 56) zur Speicherung jeweils der Nicht-Korrelationsdaten entsprechend wenigstens einem Block.

25. Vorrichtung nach einem der Ansprüche 17 bis 24, dadurch gekennzeichnet, daß die Steuereinrichtung bzw. das Schaltwerk (40) ein Mikroprozessor ist.

26. Vorrichtung nach einem der Ansprüche 17 bis 24, dadurch gekennzeichnet, daß die Schaltungsanordnung (42, 44) für die Bildung des globalen Korrelationssignales eine Einrichtung (218, 220, 222) umfaßt, welche die Überführung des globalen Korrelationssignales in einen anderen Zustand verhindern soll, wenn ein einziges einen einzigen Block des Abschnittes darstellendes Datensignal Daten aufweist, welche nicht den vorbestimmten Zusammenhang mit den entsprechenden Daten des Referenzblockes aufweisen.

27. Vorrichtung nach einem der Ansprüche 17 bis 26, dadurch gekennzeichnet, daß zusätzlich ein Magnetbandaufzeichnungsgerät (68, 70) enthalten ist, dessen Motor vom Schaltwerk (40) gesteuert ist.

28. Einrichtung zur Wiedergewinnung eines Fernsehsignales ausgehend von einem einen Abschnitt darstellenden Signal, welches die Daten eines einen Referenzblock darstellenden Signales, eines globalen Korrelationssignales und von Nicht-Korrelationssignal enthält und durch Kompression unter Anwendung des Verfahrens nach einem der Ansprüche 1 bis 16 gebildet wurde, dadurch gekennzeichnet, daß sie umfaßt:

— einen ersten Speicher (32) zum Speichern der Daten des den Referenzblock darstellenden Signales,

— einen zweiten Speicher (52, 54, 56) zum Speichern der Nicht-Korrelationsdatensignale,

— einen dritten Speicher (44) zum Speichern des globalen Korrelationssignales,

— eine Steuereinrichtung bzw. ein Schaltwerk (40) zum Empfang des Korrelationssignales und zur Steuerung des Übertragung von Nicht-Korrelationssignalen lediglich dann, wenn das globale Korrelationssignal einen bestimmten Zustand aufweist, und zur Steuerung der Übertragung des den Referenzblock darstellenden Datensignales, wenn das globale Korrelationssignal einen anderen Zustand aufweist, und

— eine Ausgabeschaltung (64) zur Kombination der übertragenen Daten mit Synchronisationsdaten.

29. Vorrichtung nach Anspruch 28, dadurch gekennzeichnet, daß der Speicher (32) zum Speichern der Daten des einen Referenzblock darstellenden Signales und der Speicher (44) zum Speichern des Korrelationssignales von einem einzigen Speicherträger gebildet sind.

**Claims**

1. Process for compressing data represented by a signal which can be divided into sections each including at least three data blocks, the main part of data of a block being substantially identical to corresponding data of a next or neighbouring block, said process being of the type including, for at least a section of the signal, the step of comparing the data signal corresponding to a data block, considered as a reference block, with each data signal representing an other data block of the section, and being characterized in that it includes,

— forming a global correlation signal which may have a first status only when corresponding data of data signal representing the reference block and of each data signal representing an other block present, a predetermined relation, and which has an other status at least when the corresponding data of at least a minimum number of data signals representing other blocks and of data signal of reference block do not present said predetermined relation,

— forming non-correlation data signals at least for some blocks of the section, the non-correlation data signal of a block including only the data of the signal representing this block which correspond to the fact that the global correlation signal has its other status, and

— forming a section representing signal which includes the data of the signal representing the reference block, of the global correlation signal and of the non-correlation data signal.

2. Process according to claim 1, characterized in that said minimum number of data signals is equal to 1.

3. Process according to one of claims 1 and 2, characterized in that it includes, before or during comparing step, storing data signals representing all blocks of the section.

4. Process according to any of claims 1 to 3, characterized in that global correlation signal forming step is progressive and includes forming a local correlation signal having a first status only when corresponding data of data signal representing reference block and of data signal representing an other block present said predetermined relation, and having an other status at least when corresponding data don't present said predetermined relation, and forming an updated correlation signal having a first status only when the updated correlation signal corresponding to the block preceding said other block and local correlation signal are both in their first status.

5. Process according to claim 3 single or with claim 4, characterized in that it includes parallel transmission of non-correlation data signal of the different blocks, and their conversion into serial form.

6. Process according to any one of preceding claims, characterized in that the reference block is the first of the section.

7. Process according to any one of preceding claims, characterized in that it further includes setting the global correlation signal to its other status even when corresponding data of all blocks present said predetermined relation, in order that said global correlation signal is at its other status during a determined portion of a data block.

8. Process according to any one of preceding claims, characterized in that it includes interrupting the section in order that the data block portion during which correlation signal is at its other status remains lower than a determined value.

9. Process according to claim 8, characterized in that said determined value changes with the number of blocks yet included in the section.

10. Process according to any one of preceding claims, characterized in that the section is interrupted when the number of blocks it includes is lower than or equal to a determined higher limit.

11. Process according to any one of preceding claims, characterized in that, when comparing step shows that compared block is very different from reference block, process includes interrupting the section in order that the last section block is the block preceding compared block, said compared block being then the first of the next section.

12. Process according to any one of preceding claims, characterized by including forming the non-correlation data signal for all section blocks, except possibly reference block.

13. Process according to any one of preceding claims, characterized in that said predetermined relation presented by two compared signals whose correlation signal is at its first status, is that difference between said two signals is lower than a threshold value.

14. Process according to any one of preceding claims, characterized by including inhibiting setting of global correlation signal at its other status when a single data signal representing a single section block other than the first and the last block of the section, has data which don't present said predetermined relation with corresponding data of reference block.

15. Process according to any one of preceding claims, characterized in that said signal which can be divided into sections is a video signal, data blocks being frames of said signal.

16. Process according to any one of preceding claims, characterized by including, before signal processing, extracting some parts as synchronising signals, and adding further signals, as synchronising signals, to said signal representing the section.

17. Apparatus for compressing data represented by a signal which may be divided into sections each including at least three data blocks, the greatest part of data from a block being substantially identical to corresponding data from an adjacent or neighbouring block, said apparatus being for carrying out a process according to any one of preceding claims, and being of the type including:

— store means (32) for storing at least the data signal of a block forming a reference block, and

— comparator means (36) for receiving on the one part data signal of reference block and on the other part data signal of at least an other block, and for forming a correlation signal which is in a first status when corresponding data from at least two compared signals present a predetermined relation and is in an other status when said signals do not present said predetermined relation, and being characterized by further including

— global correlation signal forming means (42, 44) for forming a global correlation signal which can be in a first status only when corresponding data from reference block data signal and from each data signal representing other blocks present said predetermined relation and is at an other status at least when corresponding data of at least a minimum number of data signals representing other blocks and of reference block data signal don't present said predetermined relation,

— control means (40) responsive to global correlation signal and for controlling transmitting non-correlation data signal including data representing compared block only when global correlation signal is at its other status,

— a switching circuit (48) for receiving data from store means for comparator means, and for transmitting data either to an output or to store registers (52, 54, 56), and

— clock means (38) for receiving at least a part of said signal which can be divided into sections and for generating clock signals at least for control means (40).

18. Apparatus according to claim 17, characterized in that it includes a second store means (34) for storing at least data signals from said other block which is compared to the reference block data signal.

19. Apparatus according to any one of claims 17 and 18, characterized by including a switching circuit (30) for transmitting the received signal either to the reference block store means, or to the comparator means and possibly to second store means.

20. Apparatus according to claim 17, characterized in that said store means (200) stores all data blocks of the sections.

21. Apparatus according to any one of claims 17 to 20, characterized in that said global correlation signal forming means (42, 44) includes at least store means (44) for storing correlation signal.

22. Apparatus according to claim 21, characterized in that the global correlation signal forming means (42) includes a gate circuit receiving the signal from comparator means and the correlation signal of preceeding block and which transmits the correlation signal of current block to store means (44).

23. Apparatus according to any one of claims 21 to 22, characterized in that store means (32) for storing at least a data block and store means (44) for storing correlation signal are constituted by a single storing medium.

24. Apparatus according to any one of claims 17 to 23, characterized by including store registers (52, 54, 56) each for containing non-correlation data corresponding to at least one block.

25. Apparatus according to any one of claims 17 to 24, characterized in that said control means (40) is a microprocessor.

26. Apparatus according to any one of claims 17 to 24, characterized in that global correlation signal forming means (42, 44) includes means (218, 220, 222) for preventing setting global correlation signal at its other status when a single data signal representing a single section block other than the first and the last block of the section, has data which don't present said predetermined relation with corresponding data from reference block.

27. Apparatus according to any one of claims 17 to 26, characterized by further including magnetic tape recording means (68, 70) having motor means controlled by control means (40).

28. Apparatus for reading television signal from a signal representing a section and including data of a signal representing a reference block, of a global correlation signal and of non-correlation data signals, constructed by compressing data through a process according to any one of claims 1 to 16, characterized by including:

— first store means (32) for storing data of signal representing the reference block,
— second store means (52, 54, 56) for storing non-correlation data signals,
— third store means (44) for storing global correlation signal,
— control means (40) responsive to global correlation signal and for controlling transmitting non-correlation data signals only when global correlation signal has a defined status, and for controlling transmitting signal of data representing reference block when global correlation signal has an other status, and
— output means (64) for combining transmitted data with synchronizing data.

29. Apparatus according to claim 28, characterized in that store means (32) for storing data of signal representing a reference block, and store means (44) for storing correlation signal are constituted by a single storing medium.

Fig.1

Fig.8

Fig. 2

Fig.3

Fig.4

Fig.5

5

*Fig. 6*

Fig.7